# EUROPEAN PATENT APPLICATION

(11) **EP 4 737 150 A1**
(43) Date of publication of application: **06.05.2026**
(21) Application number: 23951267.6
(22) Date of filing: 28.09.2023
(51) Int. Cl.: B60J 10/76, B60J 10/30, B60J 10/265, B60R 13/04, B60Q 1/26

(54) **WEATHER STRIP ASSEMBLY AND VEHICLE**

(30) Priority: 08.09.2023 CN 202311153971; 08.09.2023 CN 202322434965 U
(71) Applicant: Fuyao Glass Industry Group Co., Ltd., Fuqing, Fujian 350300 (CN)
(72) Inventor: MA, Anqin, Fujian 350300 (CN); LIAN, Xibin, Fujian 350300 (CN); TAO, Guangchun, Fujian 350300 (CN); HE, Kai, Fujian 350300 (CN); YANG, Renyi, Fujian 350300 (CN); LIN, Zhiqing, Fujian 350300 (CN)
(74) Representative: Patentanwälte Olbricht Buchhold Keulertz
(86) International application number: PCT/CN2023/122932
(87) International publication number: WO 2025/050450

(57) **Abstract**

A weatherstrip assembly and a vehicle. The weatherstrip assembly (100) is used to be installed between a vehicle window glass (300) and a door panel sheet metal (200). The weatherstrip assembly (100) includes a weatherstrip body and a sealing member (9). The sealing element (9) extends longitudinally along a first direction, and has an inner surface facing the door panel sheet metal (200) and an outer surface facing away from the door panel sheet metal (200). The outer surface is provided with a positioning portion. The weatherstrip body as a whole extends longitudinally along the first direction, and is provided with a connecting mechanism, which is connected to the positioning portion and arranged in segments along the first direction.

## Description

### RELATED APPLICATION

The present disclosure claims priority to Chinese Patent Application No. 202311153971.5, filed September 8, 2023, entitled "Weatherstrip Assembly and Vehicle", and Chinese Patent Application No. 202322434965.9, filed September 8, 2023 entitled "Weatherstrip assembly and vehicle".

### TECHNICAL FIELD

The present disclosure relates to the technical field of automotive weatherstrips, and particularly to a weatherstrip assembly and a vehicle.

### BACKGROUND

With the rapid development of the automotive industry, people are increasingly focusing their attention on driving environments with safety guarantees, particularly raising the attention level and the requirements for details. In addition, the competition and the development in industrialization make manufacturers have higher pursuit for the control of production time and the improvement of efficiency. For the production process of automotive parts, simple installation, reliable assembly and high production efficiency are the consistent goals of designers and manufacturers.

Currently, most automobiles mainly use the weatherstrips made of stainless steel or aluminum alloy to accentuate vehicle body lines. The weatherstrip, also called a vehicle window trim strip, is one of the most important sealing strips in an automotive sealing system, and it is closely attached to lifting glass of a vehicle window during use to block rainwater from immersing, so as to achieve the functions of anti-leakage, sound insulation, dust prevention, shock absorption and sealing. Since the sealing strip on an outer side of a window sill is exposed outside the window, it serves not only as a sealing member, but also as an appearance trim member, and then high appearance requirements are put forward therefor.

Furthermore, in order to improve the overall premium feel of the automobile, the automotive weatherstrip should not only be closely attached to the lifting glass of the window during use to block rainwater from immersing, so as to achieve the functions of anti-leakage, sound insulation, dust prevention, shock absorption and sealing, but also realize simple interactive functions such as luminescence. For example, at present, more and more new energy vehicles and some mid-to high-end models use luminescent elements, which endow the vehicle body with a more futuristic, tech-savvy design. Meanwhile, in nighttime or dim environments, these elements can clearly outline the contour of the vehicle body, thereby further improving the safety during road travel.

Conventional luminescent weatherstrips generally require a transparent outer shield for a light guide bar. The outer shield of the luminescent weatherstrip is usually a semitransparent plastic product formed by extrusion or injection molding. The applicant finds that in the actual productization, since the luminescent weatherstrip is installed between a vehicle window glass and a door panel sheet metal, the installation space is small and limited, and the structural design of the outer shield or the like is complicated, which easily leads to the disadvantages of difficult mold machining and poor mass production.

### SUMMARY

Aiming at the defects in the prior art, embodiments of the present disclosure provide a weatherstrip assembly and a vehicle, which can simplify the structure of the mold, increase the production efficiency and greatly improve the mass production of products.

Specific technical solutions of the embodiment of the present disclosure are as follows.

A weatherstrip assembly for being installed between a vehicle window glass and a door panel sheet metal, including a weatherstrip body and a sealing member. The sealing element extends longitudinally along a first direction, and has an inner surface facing the door panel sheet metal and an outer surface facing away from the door panel sheet metal. The outer surface is provided with a positioning portion. The weatherstrip body as a whole extends longitudinally along the first direction, and is provided with a connecting mechanism, which is connected to the positioning portion and arranged in segments along the first direction.

The present disclosure provides a vehicle, including the aforementioned weatherstrip assembly.

The present disclosure has the following advantageous effects.

The weatherstrip assembly provided in the embodiments of the present disclosure, through structural improvements to the weatherstrip body (i.e., the exterior trim panel and the rear cover), solves the problems such as the excessive number of mold forming mechanisms, difficult machining and poor mass production in existing luminescent weatherstrip structure. It can simplify the mold structure, greatly improve the mass production of products, realize the universal arrangement of the photoelectric module in the space of the plastic weatherstrip assembly, and maintain good photoelectric performance.

In addition, the weatherstrip assembly provided in embodiments of the present disclosure changes the process method for fixing the exterior trim panel and the rear cover from bonding and gluing to structural fixation. Specifically, by using a welded structure (particularly ultrasonic welding technology) to fix the exterior trim panel and the rear cover, it overcomes a series of drawbacks caused by the existing bonding and gluing method, thereby solving various technical problems arising from the use of double-sided tape /PU adhesive fixing methods to fix the exterior trim panel and the rear cover in the prior art.

### BRIEF DESCRIPTION OF THE DRAWINGS

The following drawings are only intended to illustrate and explain the present disclosure, rather than limiting the scope of the present disclosure. In the drawings,
FIG. 1 illustrates an installation diagram of a plastic luminescent weatherstrip assembly module structure that adopts a bonding and gluing technology in the related art;
FIG. 2 illustrates a cross-sectional view of a plastic luminescent weatherstrip assembly taken along line A-A in FIG. 1;
FIG. 3 illustrates an exploded view of a weatherstrip assembly according to an embodiment of the present disclosure;
FIG. 4 illustrates a structural diagram of a weatherstrip body of a weatherstrip assembly according to an embodiment of the present disclosure;
FIG. 5 illustrates a cross-sectional view taken along line E-E in FIG. 4;
FIG. 6 illustrates a partial enlarged view of area M in FIG. 5;
FIG. 7 illustrates a structural diagram of a weatherstrip assembly according to an embodiment of the present disclosure;
FIG. 8 illustrates a cross-sectional view of a weatherstrip assembly taken along line C-C in FIG. 7;
FIG. 9 illustrates a hierarchical diagram of the spatial structure of the weatherstrip assembly in FIG. 8;
FIG. 10 illustrates a cross-sectional view taken along line F-F in FIG. 4;
FIG. 11 illustrates a partial enlarged view of area N in FIG. 10;
FIG. 12 illustrates a cross-sectional view of another weatherstrip assembly taken along line C-C in FIG. 7;
FIG. 13 illustrates a hierarchical diagram of the spatial structure of a weatherstrip assembly in FIG. 12;
FIG. 14 illustrates a cross-sectional view of another weatherstrip assembly taken along line B-B in FIG. 7;
FIG. 15 illustrates a hierarchical diagram of the spatial structure of a weatherstrip assembly in FIG. 14; and
FIG. 16 illustrates a spatial diagram of a vehicle in a three-dimensional coordinate system.

### DETAILED DESCRIPTION OF THE EMBODIMENTS

For a clearer understanding of the technical features, objectives and effects of the present disclosure, specific embodiments of the present disclosure will now be described with reference to the drawings.

A weatherstrip photoelectric module outside an automotive door is an automotive exterior trim part that requires both photoelectric functionality and appearance performance. The weatherstrip photoelectric module is installed on an outer door panel flange, which provides sealing between the door and the vehicle window glass, along with a welcome decorative effect. As a functional component, the weatherstrip photoelectric module also has functions such as waterproof, dustproof, noise reduction, welcome lighting, and battery level display, etc. In addition, different decorative styles can be achieved by selecting different materials, brightnesses and colors for its appearance.

The prior art discloses an external weatherstrip structure that includes a transparent trim strip, both ends of which are bent to form a first snapping portion and a second snapping portion, which are arranged facing each other. For metal parts, they can be bent at both ends to form snapping portions; however, for injection-molded plastic parts, they cannot be bent after molding. Thus, for injection-molded structures requiring snap-fits at both ends, the complexity and feasibility of mold structure for manufacturing the plastic parts should be considered during mold design.

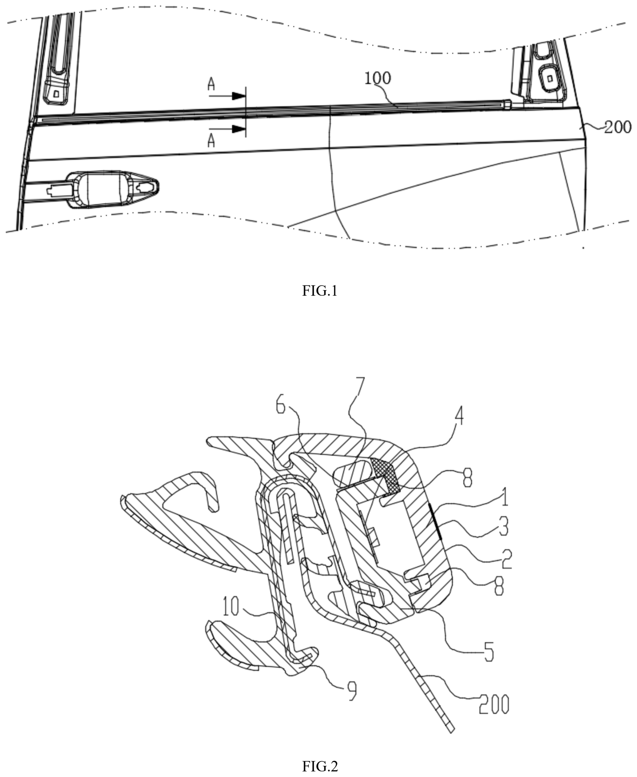

Referring to FIGS. 1 and 2, the related art provides a luminescent weatherstrip structure 100, which may include an exterior trim panel 1 (i.e., a cover), a light-emitting module 4, a rear cover 5, a TPE (Thermoplastic Elastomer) sealing strip 9 with a steel belt 10, etc.

The exterior trim panel 1 is combined with paint 2 through a spraying process; after spraying, the exterior trim panel 1 undergoes laser engraving to form a light-emitting area 3; the light-emitting module 4 is fixed on the rear cover 5 by adhesion; a wire harness 7 is connected to the light-emitting module 4 by welding and adhered to a sidewall of the rear cover 5 through a double-sided tape 6; the rear cover 5 is fixed on the exterior trim panel 1 through the double-sided tape/a PU adhesive 8; an upper snap-fit and a lower snap-fit of the exterior trim panel 1 are assembled with a snapping groove of the TPE sealing strip 9 (containing the steel belt 10); the TPE sealing strip 9 is inserted into a door panel sheet metal 200, and front and rear end caps are inserted into the door panel sheet metal 200; and the wire harness 7 passes through the door panel sheet metal 200, and finally is connected to a vehicle body control module for power supply and signal transmission.

However, the weatherstrip exhibits several drawbacks when the light-emitting module 4 is integrated:
1) Since the luminescent weatherstrip structure 100 is installed between the vehicle window glass and the door panel sheet metal 200, the installation space is small. Space constraints necessitate complex structural designs for both the exterior trim panel 1 (i.e., the cover) and the rear cover 5-particularly requiring both upper and lower snap-fit structures, which in turn leads to an excessive number of mold forming mechanisms for the cover and the rear cover 5, and ultimately may result in disadvantages such as difficult mold machining and poor mass production.
2) The rear cover 5 is fixed on the exterior trim panel 1 through the double-sided tape/the PU adhesive 8, i.e., the two injection-molded parts are connected using a bonding process and a gluing process, which generate the following shortcomings: when the existing luminescent weatherstrip structure 100 is installed, the bonding and the gluing are manually completed, which cannot effectively ensure the airtightness inside the weatherstrip, thus failing to meet the long-term functional usage requirements. Moreover, since both the bonding and the gluing are manually completed when the weatherstrip module is installed, the product assembly issues cannot be completely ruled out, and the yield is low. In addition, the use of the bonding and the gluing also increases the cost of auxiliary materials such as the double-sided tape 6 or the glue.
3) For the plastic luminescent weatherstrip structure 100, due to the presence of the photoelectric module, an LED light source emits a large amount of heat during operation, and the traditional bonding and gluing processes cannot conduct the heat away.

Therefore, there is a need for a luminescent weatherstrip structure to solve at least one of the above problems.

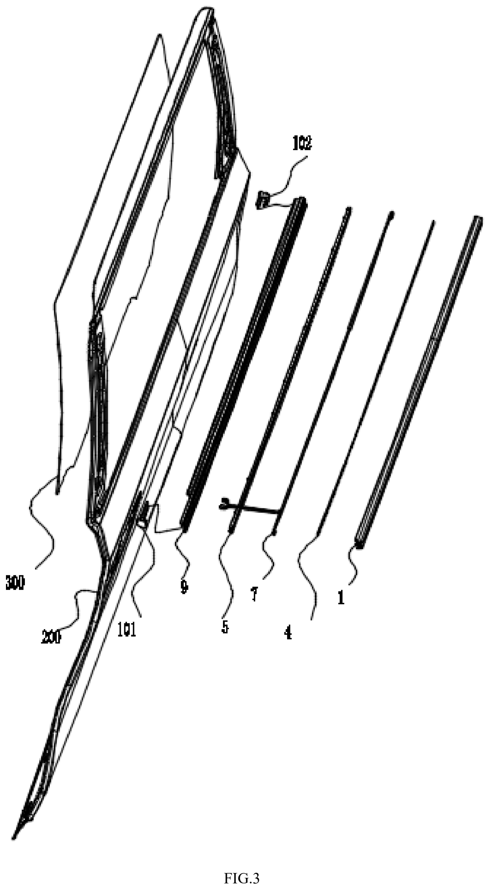

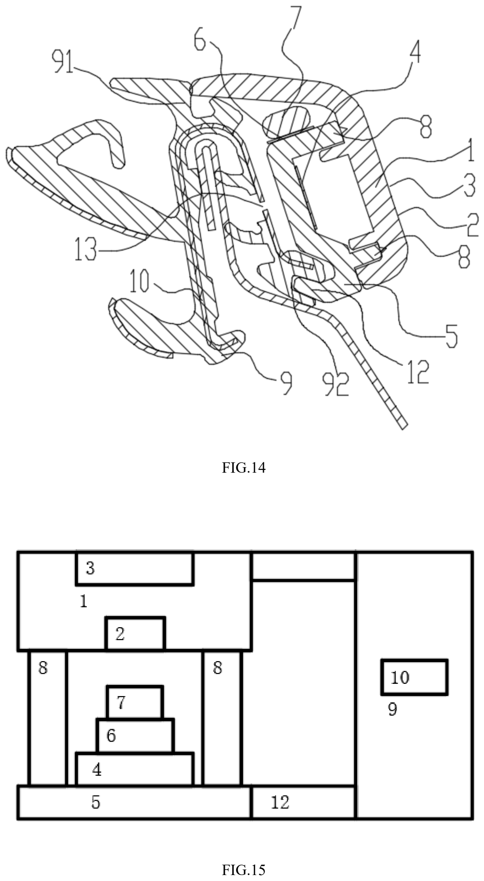

Referring to FIGS. 3 to 15, embodiments of the present disclosure provides a weatherstrip assembly 100, which is used for being installed between a vehicle window glass 300 and a door panel sheet metal 200, and may mainly include a weatherstrip body and a sealing member 9. The luminescent weatherstrip assembly may further include a light-emitting module 4.

The weatherstrip body extends longitudinally along a first direction and may include an exterior trim panel 1 and a rear cover 5 joined together. The exterior trim panel 1 has a first inner surface 111 facing the rear cover 5, and a first outer surface 112 opposite to the first inner surface 111. The rear cover 5 has a second inner surface 51 facing the exterior trim panel 1, and a second outer surface 52 opposite to the second inner surface 51. At least part of the first inner surface 111 is sealingly fixed to at least part of the second inner surface 51 in a predetermined mode. Specifically, this predetermined mode may be welding, although other feasible sealing and fixing methods are not excluded. In the embodiments of the present disclosure, welding is mainly used as an example for illustration. When the first inner surface 111 and the second inner surface 51 are sealed and fixed by forming a welded structure therebetween, an installation cavity for installing the light-emitting module 4 is formed.

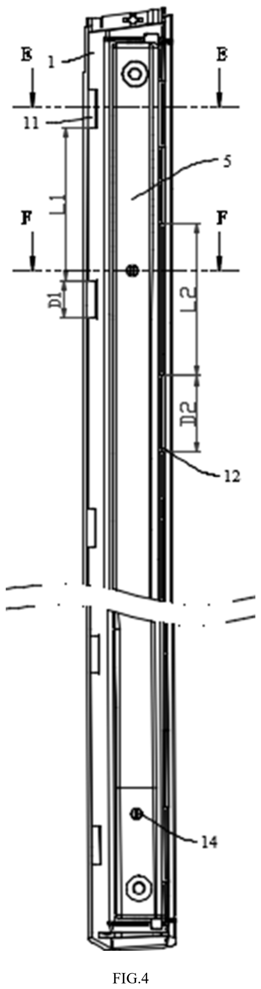

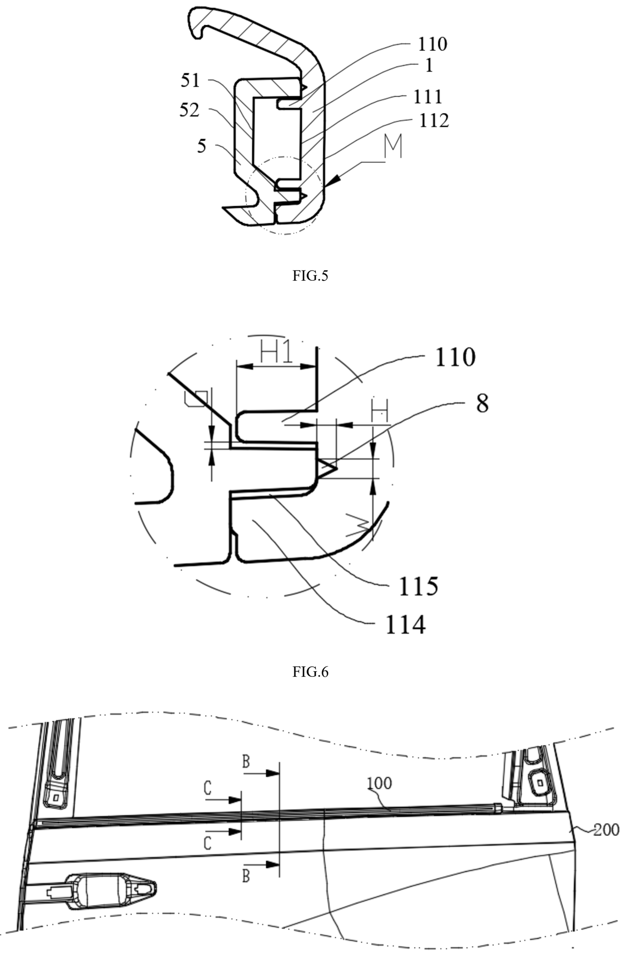

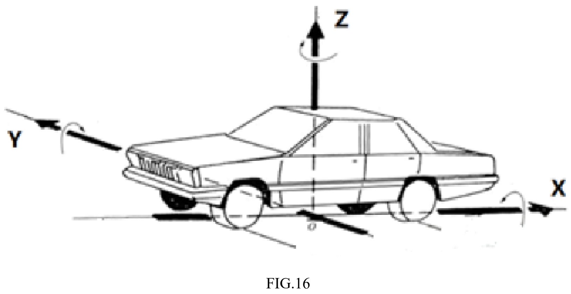

Referring to FIGS. 4 and 5, the weatherstrip body extends longitudinally along a first direction, which matches an extending direction of an outer door panel flange. The extending direction of the weatherstrip body can be adaptively adjusted according to changes in the extending direction of the outer door panel flange, which is not specifically limited herein. For example, referring to FIG. 16, the first direction may be parallel or substantially parallel to the vehicle traveling direction X.

The weatherstrip body may include an exterior trim panel 1 and a rear cover 5joined together. The exterior trim panel 1 and the rear cover 5 are each integrally injection-molded parts, i.e., both can be integrally injection-molded, thereby forming a transparent weatherstrip body structure.

In an embodiment of the present disclosure, the exterior trim panel 1 and the rear cover 5 are fixed by forming a welded structure therebetween, so as to form an installation cavity for installing the light-emitting module 4.

Referring to FIG. 6, the welded structure (i.e., an ultrasonic structure 8) may be formed between the exterior trim panel 1 and the rear cover 5 by means of ultrasonic welding.

The principle of the ultrasonic welding is as follows: when ultrasonic waves act on a contact surface between thermoplastic plastics, high-frequency vibrations of tens of thousands of times per second will be generated. Such high-frequency vibrations with certain amplitudes transmit ultrasonic energy to a welding area through an upper welded part. Due to the large acoustic resistance at the welding area, i.e., the interface between two welded parts, a local high temperature is generated. Additionally, because plastics have poor thermal conductivity, the heat cannot be dissipated in time and accumulates in the welding area, causing the contact surface between the two plastics to melt rapidly. With the application of a certain pressure, the two plastics fuse into one. After the ultrasonic waves stop acting, the pressure is maintained for a few seconds to allow the fused part to solidify and form a stable structure, thereby creating a strong molecular chain and achieving the purpose of welding, with a welding strength close to that of the raw material. Overall, using the ultrasonic welding to form an ultrasonic welded structure offers the following advantages:
1. Achieving reliable connection between the exterior trim panel 1 and the rear cover 5: ultrasonic welding can achieve a reliable connection between plastic materials and forming a strong weld seam, thus giving the workpiece high strength and good sealing performance.
2. Fast and efficient welding: ultrasonic welding is a rapid welding method that can complete the welding process in a short time, improving production efficiency.
3. No additives required: compared to other welding methods, ultrasonic welding does not require additives such as welding agent or glue, thereby avoiding additional material costs and environmental pollution.
4. Smokeless and odorless: the ultrasonic welding process does not produce smoke, odor or harmful gas, providing a clean and environmentally friendly welding environment.
5. Precise control: ultrasonic welding allows precise control of welding parameters such as vibration frequency, amplitude, and applied pressure, enabling fine adjustment and control of welding quality.

Furthermore, connecting the exterior trim panel 1 and the rear cover 5 by means of the ultrasonic welding can effectively compress the space of the plastic luminescent weatherstrip structure, resulting in a small overall spatial volume that does not occupy Y-direction space of the door panel sheet metal. The Y-direction space may be less than or equal to 10 mm. Moreover, the structural arrangement can adapt to any type of plastic luminescent weatherstrip structure, offering excellent versatility.

When the exterior trim panel 1 and the rear cover 5 are welded by means of ultrasonic waves, an ultrasonic structure 8 can be formed between them. It should be noted that before the ultrasonic welding, ultrasonic ribs may be provided on the rear cover 5 and/or the exterior trim panel 1 at the joining positions. After the ultrasonic welding is completed, the ultrasonic ribs melt, thereby forming the ultrasonic structure 8 between the exterior trim panel 1 and the rear cover 5.

Referring to FIGS. 5, 7 and 8, in an embodiment, the light-emitting module 4 is fixedly installed on the second inner surface 51 of the rear cover 5, and the exterior trim panel 1 is provided with the light-emitting area 3 aligned with the light-emitting module 4.

In this embodiment, the light-emitting module 4 includes a plurality of light-emitting elements which may be arranged at intervals along the first direction. In addition, the luminescent weatherstrip assembly may also include the paint 2, the light-emitting area 3, the wire harness 7, etc. Specifically, the paint 2 may be provided on the first outer surface 112 of the exterior trim panel 1 through a spraying process. After spraying, the first outer surface 112 of the exterior trim panel 1 undergoes laser engraving to form the light-emitting area 3. The light-emitting module 4 may be fixed on the second inner surface 51 of the rear cover 5 by adhesion. The wire harness 7 may be connected to the light-emitting module 4 by welding and adhered to the second outer surface 52 of the rear cover 5. The wire harness 7 passes through the door panel sheet metal 200 and connects to a vehicle body control module for power supply and signal transmission. Specifically, the wire harness 7 may be adhered and fixed to the sidewall of the second outer surface 52 of the rear cover 5 using a double-sided tape 6.

Alternatively, the connection mode of the wire harness 7 and the light-emitting module 4 and the fixing mode of the wire harness 7 and the rear cover 5 may also other ways and are not limited to the above description. Those skilled in the art, inspired by the essence of the present application, may make other modifications. However, as long as the functions and effects achieved are the same or similar to those of the present application, they shall be fallen within the scope of the present disclosure.

Referring to FIGS. 5 and 6, regarding the method of fixing the rear cover 5 to the exterior trim panel 1 via the ultrasonic structure 8, specifically in terms of structural arrangement, a stopper 110 of a predetermined height is provided on the first inner surface 111 of the exterior trim panel 1 and located outside the periphery of the light-emitting area 3. The rear cover 5 is a cap-shaped cover with an open end, which is fitted over the periphery of the stopper 110. The cap-shaped cover has an open end, and the ultrasonic ribs are disposed on the end face of the open end before the ultrasonic welding.

In this embodiment, before the ultrasonic welding, the end face of the open end of the rear cover 5 may be provided with the ultrasonic ribs. Specifically, the dimensions of the ultrasonic ribs may vary depending on the fit dimensions between the exterior trim panel 1 and the rear cover 5, as well as the required connection strength, etc. For example, in the weatherstrip assembly 100 applied in the embodiments of the present disclosure, after comprehensively considering factors such as structural connection strength and cost-effectiveness, the height H of the ultrasonic ribs may be preferably between 0.6 mm and 0.8 mm, and the width W of the ultrasonic ribs may be preferably between 0.6 mm and 0.8 mm.

The stopper 110 of the exterior trim panel 1 is located inside the rear cover 5, so that it can be used to assist in positioning the rear cover 5 during welding, to block molten material generated during welding from overflowing, and also to block welding debris, preventing it from entering the cavity between the exterior trim panel 1 and the rear cover 5.

Before the ultrasonic welding, there is a predetermined gap G between a sidewall of the cap-shaped cover close to the open end and the stopper 110. The predetermined gap G is between 0.1 mm and 0.3 mm, and the height H1 of the stopper 110 may be between 2 mm and 3 mm.

The stopper 110 may be integrally injection-molded with the exterior trim panel 1. By comprehensively considering various factors such as the corresponding function, the production cost and the production process of the structure, the height H1 of the stopper 110 may be between 2 mm and 3 mm. When the height H 1 is between 2 mm and 3 mm, the stopper 110 not only reliably meets the function of preventing the material from overflowing and blocking welding debris during the ultrasonic welding, while also being injection molded at a relatively economical production cost. If the height of the stopper 110 is too low (e.g., less than 2 mm), it may not reliably fulfill the aforementioned functions of preventing overflow and blocking welding debris. If the height of the stopper 110 is too high (e.g., more than 3 mm or even more than 5 mm), it may significantly increase injection molding pressure, reduce cost-effectiveness, and even directly affect moldability.

The stopper 110 is in clearance fit with the sidewall of the rear cover 5, and the predetermined gap G therebetween may be between 0.1 mm to 0.3 mm.

If the predetermined gap G is too small (e.g., less than 0.1 mm), a sufficient space for preventing molten material overflow cannot be formed between the stopper 110 and the sidewall of the rear cover 5. If the predetermined gap G is too large (e.g., more than 0.3 mm, or even more than 0.5 mm), the limiting effect of the stopper 110 cannot be realized. In this case, there may be a large surface difference between the exterior trim panel 1 and the rear cover 5 after connection, affecting the product's appearance and even directly affecting the product yield.

It should be noted that the embodiments listed in the present disclosure are mainly described by disposing the ultrasonic ribs on the rear cover 5. During the ultrasonic welding, force application points need to be set on the structural part provided with the ultrasonic ribs for applying pressure. Since the exterior trim panel 1 has high appearance requirements, to prevent adverse effects on the appearance of the exterior trim panel, the ultrasonic ribs are disposed on the rear cover 5. Of course, the present disclosure does not exclude the embodiments in which the ultrasonic ribs are disposed on the exterior trim panel 1, or on both the rear cover 5 and the exterior trim panel 1.

Further, the exterior trim panel 1 has an upper end portion and a lower end portion 114 opposite to each other along a height direction, and a groove 115 for clearance fit with the sidewall of the cap-shaped cover is formed between the lower end portion 114 and the stopper 110. The groove 115 formed between the lower end portion 114 of the exterior trim panel 1 and the stopper 110 can be used for auxiliary positioning via clearance fit with the cap-shaped cover before the ultrasonic welding.

In a specific embodiment, the stopper 110 is a closed annular structure extending continuously along a circumferential direction. Since the stopper 110 is a closed annular structure in the circumferential direction, it can form a reliable circumferential seal with the exterior trim panel 1, and the mold structure corresponding to the injection-molding process is simple with low manufacturing cost.

Of course, in some other embodiments, the stopper 110 may be provided partially in the circumferential direction. For example, the stopper 110 may be provided at the middle-lower part of the exterior trim panel 1, and a receiving groove is provided on the end face of the open end of the rear cover 5 to provide space for molten material overflow.

The weatherstrip assembly 100 provided in the embodiments of the present disclosure changes the process method for fixing the exterior trim panel 1 and the rear cover 5 from bonding and gluing to structural fixation. Specifically, by using a welded structure (particularly ultrasonic welding technology) to fix the exterior trim panel 1 and the rear cover 5, it overcomes a series of drawbacks caused by the existing bonding and gluing method, thereby solving various technical problems arising from the use of double-sided tape 6/PU adhesive fixing methods to fix the exterior trim panel 1 and the rear cover 5 in the prior art.

The weatherstrip assembly 100 provided in the embodiments of the present disclosure, through structural improvements to the weatherstrip body (i.e., the exterior trim panel 1 and the rear cover 5), solves the problems such as the excessive number of mold forming mechanisms, difficult machining and poor mass production in existing luminescent weatherstrip structure. It can simplify the mold structure, greatly improve the mass production of products, realize the universal arrangement of the photoelectric module in the space of the plastic weatherstrip assembly, and maintain good photoelectric performance.

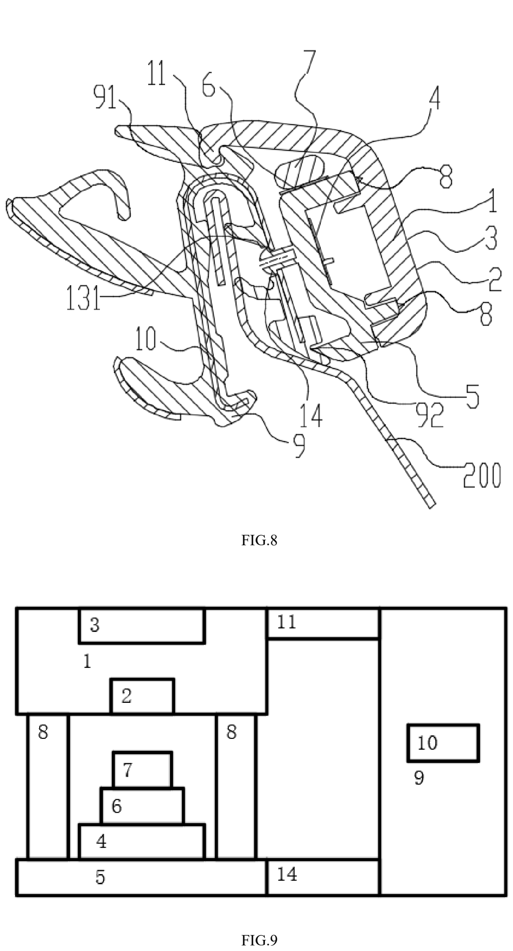

Referring to FIGS. 8, 12 or 14, the weatherstrip assembly 100 may further include a sealing member 9 connected to the weatherstrip body. The sealing member 9 extends longitudinally along the first direction, and has an inner surface facing the door panel sheet metal 200 and an outer surface facing away from the door panel sheet metal 200. A positioning portion is provided on the outer surface of the sealing member 9. The weatherstrip body is provided with a connecting mechanism, which is connected to the positioning portion of the sealing member 9 and arranged at intervals along the first direction.

**In** this embodiment, the weatherstrip assembly 100 further include the sealing member 9, which is strip-shaped as a whole and extends along the first direction. Specifically, the sealing member 9 may be in the form of a TPE sealing strip. Of course, the specific material of the sealing member 9 may also vary depending on the actual requirements of the sealing material and the situation of material improvement, which is not specifically limited in the present disclosure.

A reinforcement, which specifically may be a steel belt, is provided inside the sealing element 9 to support and shape the sealing element 9. Of course, the specific material of the reinforcement is not limited to the above example. In the embodiments of the present disclosure, the steel belt is taken as an example for illustration.

As illustrated in FIG. 3, the weatherstrip assembly 100 may further include a front end cap 101 and a rear end cap 102. During assembly, the TPE sealing strip may be inserted into the door panel sheet metal 200, and then the front end cap 101 and the rear end cap 102 are inserted into the door panel sheet metal 200.

The weatherstrip body is provided with a connecting mechanism, for being connected to the sealing member 9. The connecting mechanism is arranged in segments along the first direction (i.e., in a segmented layout), so as to solve the problems of difficult mold machining and poor mass production in existing plastic luminescent weatherstrip structures.

During the manufacturing of the mold of the plastic luminescent weatherstrips in the related art, complex concave-convex shapes often need to be machined on the mold, which increases machining difficulty, prolongs machining time, and may affect mold quality and stability. In the present disclosure, the connecting mechanism is arranged at intervals and adopts a segmented layout. Therefore, by dividing the concave-convex shape of the mold into a plurality of small segments for machining, these problems are effectively solved.

Specifically, after adopting a segmented layout, the concave-convex shape of the mold is divided into a plurality of small blocks, each of which can be machined independently, making the machining process simpler (because the shape of each small block is simple, with lower machining difficulty). In addition, each small block can be machined independently, multiple machine tools can be used for simultaneous machining, greatly shortening machining time and improving production efficiency.

Adopting the segmented layout can also improve mold quality and stability. Since each small block can be machined independently, machining quality can be better controlled, ensuring the precision and quality of each small block meet the requirements.

Meanwhile, if a defect occurs in a certain small block of the mold, only that specific small block needs to be replaced, eliminating the need to re-manufacture the entire mold, thus greatly reducing the cost and risk.

In conclusion, by adopting segmented structure for the connecting mechanism of the weatherstrip body, and dividing the concave-convex shape of the mold into a plurality of small blocks for machining, problems of difficult mold machining and poor mass production are solved, the machining process is simplified, production efficiency is improved, and mold quality and stability can also be enhanced.

Referring to FIGS. 5, 8, 10 and 11, in an embodiment, the connecting mechanism includes a connecting member 14 disposed on the outer surface of the weatherstrip body. The positioning portion includes a first opening 131 mated with the connecting member 14, and the connecting member 14 can be connected to the first opening 131.

Specifically, the connecting mechanism may include a connecting member 14 disposed on the second outer surface 52 of the rear cover 5. The connecting member 14 has a first end close to the second outer surface 52 and a second end away from the second outer surface 52. The second end is provided with a snapping head 141, the sealing member 9 is provided with a first opening 131 mated with the snapping head 141, and the snapping head 141 can pass through the first opening 131 and snap-fit with the sealing member 9 around the periphery of the first opening 131.

In this embodiment, the connecting member 14 may be integrally injection-molded with the rear cover 5. In this case, compared with the form where the connecting member 14 is directly inserted through the rear cover 5, it not only avoids the damage of the structure of the rear cover 5, but also achieves a more firm and reliable connection with the rear cover 5. In addition, the installation steps can be reduced and the operation is simple.

As illustrated in FIG. 4, specifically, there may be a plurality of the connecting members 14, which are arranged at predetermined intervals along the first direction. When a plurality of the connecting members 14, which are integrally injection-molded with the rear cover 5, are arranged at intervals on the rear cover 5 along the first direction, they form a typical segmented structure, achieving the technical effects of the aforementioned segmented structure.

The predetermined interval between adjacent two of the connecting members 14 is between 100 mm and 120 mm. The predetermined interval between adjacent two of the connecting members 14 can be comprehensively determined according to the configuration and the weight of the weatherstrip body and the requirements for the connection strength, etc. When the predetermined interval between adjacent two of the connecting members 14 is within the above range, the structural connection strength, the cost-effectiveness, and the machining performance can be preferably balanced.

In this embodiment, the connecting member 14 has a bottom end connected to the rear cover 5 and a top end away from the rear cover 5. The top end (i.e., the end facing away from the outer surface of the weatherstrip body) is provided with the snapping head 141. The sealing member 9 is provided with a first opening mated with the snapping head 141. The snapping head 141 can pass through the first opening 131 and snap-fit with the sealing member 9 around the periphery of the first opening 131.

When the weatherstrip body is assembled with the sealing member 9, the snapping head 141 passes through the first opening 131. After passing through, the snapping head 141 snap-fits with the sealing member 9 around the periphery of the first opening 131, thereby forming a snap-fit connection structure to prevent the snapping head 141 from disengaging from the first opening 131.

Specifically, the connecting member 14 is provided with a deformation portion, which allows the snapping head 141 to contract and deform radially inward when the snapping head 141 is compressed by an external force, and allows the snapping head 141 to automatically return to its original shape upon removal of the external force.

The first opening 131 may be designed according to the outer contour size of the snapping head 141. The shape, the configuration and the size of the first opening 131 are not specifically limited herein. In particular, a gap may be formed between the first opening 131 and the connecting member 14 mated with each other. That is, the first opening 131 and the connecting member 14 can be in clearance fit. As a result, the first opening 131 can be used to drain out the accumulated water from the cavity between the weatherstrip body and the sealing member 9. In addition, for the weatherstrip assembly 100 provided with the light-emitting module 4, the light-emitting module 4 will generate a certain amount of heat during operation. If the heat accumulates in a closed cavity and cannot be quickly dissipated to the outside, it directly affects the service life of the light-emitting module 4. Utilizing this first opening 131 can dissipate heat from the cavity between the weatherstrip body and the sealing member 9 to the outside.

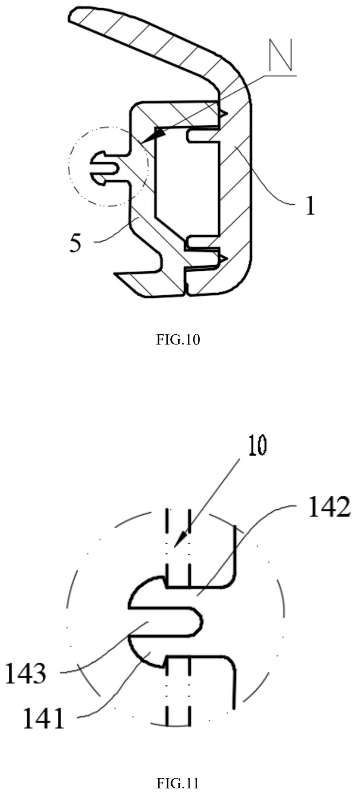

Referring to FIGS. 10 and 11, in a specific embodiment, the connecting member 14 includes a snapping head 141 and a connecting section 142 disposed between the snapping head 141 and the weatherstrip body. The cross-sectional outer contour dimension of the snapping head 141 is larger than that of the connecting section 142. The deformation portion includes a slot 143 extending from the second end toward the first end.

In this embodiment, the connecting member 14 may specifically be in the form of a peg structure similar to a "mushroom head", which may include a relatively larger snapping head 141 and a relatively smaller connecting section 142. The deformation portion of the connecting member 14 may be the slot 143 extending from the second end toward the first end. The slot 143 divides the snapping head 141 into a first portion and a second portion which are separated from each other. When the connecting member 14 is assembled with the first opening 131, the slot 143 allows the first portion and the second part to move toward each other, enabling the snapping head 141 to pass through the first opening 131. Subsequently, after passing through the first opening 131, the snapping head 141 can automatically return to its original shape and engage with the sealing member 9.

Of course, the deformation portion may also adopt any other form, which is not limited to the above description. Those skilled in the art, inspired by the essence of the present application, may make other modifications. However, as long as the functions and effects achieved are the same or similar to those of the present application, they shall be fallen within the scope of the present application.

Referring to FIGS. 8 and 9, in an embodiment, the positioning portion may further include at least one snapping groove, and the connecting mechanism may further include a snapping portion disposed on the weatherstrip body and capable of being engaged with the snapping groove.

The sealing member 9 extends longitudinally along the first direction, and has an inner surface facing the door panel sheet metal 200 and an outer surface facing away from the door panel sheet metal 200. The outer surface of the sealing member 9 is provided with at least one snapping groove. The connecting mechanism may further include a snapping portion disposed on the weatherstrip body and capable of being engaged with the snapping groove. The snapping portion may be a snap-fit disposed on the exterior trim panel 1 or the rear cover 5. For example, the snap-fit may be a first snap-fit 11 disposed on the top of the exterior trim panel 1. The snapping groove extends continuously along the first direction, and the first snap-fit 11 is disposed intermittently along the first direction.

To ensure the universality of the sealing member 9, the outer surface of the sealing member 9 may be provided with a first snapping groove 91 and a second snapping groove 92 arranged in a staggered manner in the height direction. At least one selected from the exterior trim panel 1 and the rear cover 5 may be provided with a snap-fit engaged with the first snapping groove 91 or the second snapping groove 92. The engagement between the snapping groove and the snap-fit, combined with the aforementioned engagement mode between the connecting member 14 and the first opening 131, can better ensure the installation reliability of the weatherstrip assembly 100. In the height direction, the first snapping groove 91 may be higher than the second snapping groove 92.

Alternatively, the sealing member 9 may have only the first snapping groove 91 at its upper part, or only the second snapping groove 92 at its lower part. Correspondingly, a snap-fit engaged with the first slot 143 may be provided on the exterior trim panel 1, or a snap-fit engaged with the second snapping groove 92 may be provided on the rear cover 5.

The snap-fit may be arranged in segments in the first direction to form a segmented structure, which can achieve the technical effects of the aforementioned segmented structure.

Referring to FIG. 8, in a specific embodiment, the first snapping groove 91 is located higher than the second snapping groove 92, and the exterior trim panel 1 is provided with first snap-fits 11 engaged with the first snapping groove 91.

In this embodiment, the upper part of the sealing member 9 is provided with the first snapping groove 91, the exterior trim panel 1 is provided with the first snap-fits 11 which are engaged with the first snapping groove 91, and the first snapping groove 91 and the first snap-fits 11 are engaged to form a snap structure. When the snap structure is located on the upper part, it facilitates fixing the exterior trim panel 1 to the sealing member 9, and also achieves a certain dust-proof and waterproof effect.

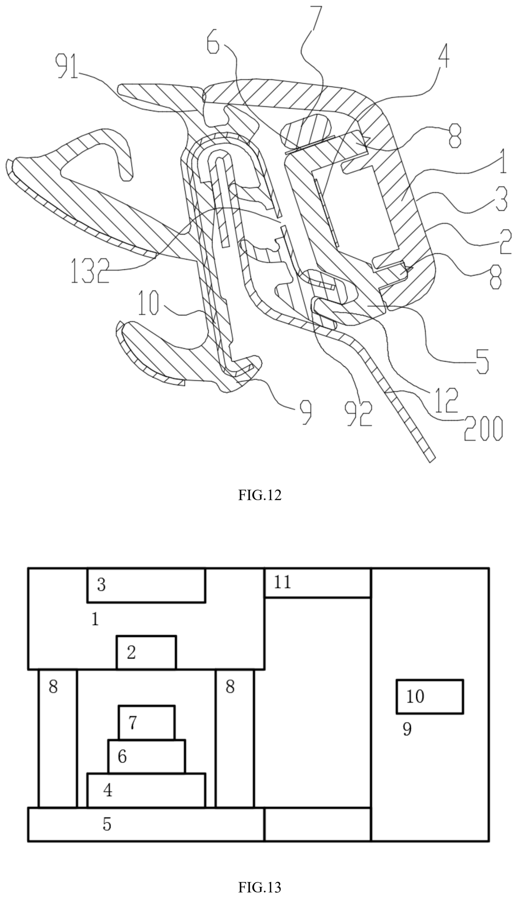

Referring to FIGS. 12 to 15, in some embodiments, the sealing member 9 extends longitudinally along the first direction. The positioning portion includes a first snapping groove 91 and a second snapping groove 92 arranged in a staggered manner in the height direction. The connecting mechanism may include first snap-fits 11 and second snap-fits 12 disposed on the weatherstrip body. The first snap-fits 11 are used to engage with the first snapping groove 91 to form a first snapping mechanism, and the second snap-fits 12 are used to engage with the second snapping groove 92 to form a second snapping mechanism. The first snapping mechanism and the second snapping mechanism are arranged in a staggered manner in the first direction.

In this embodiment, FIGS. 12 and 13 mainly show two cross-sections that are adjacent in the first direction as examples, in which the first snap-fits 11 are disposed on the exterior trim panel 1, the second snap-fits 12 are disposed on the rear cover 5, and the first snap-fits 11 and the second snap-fits 12 are arranged alternately along the first direction. The first snap-fits 11 and the second snap-fits 12 are segmented structures, which can achieve the technical effects of the aforementioned segmented structure.

In addition, for the exterior trim panel 1, it only needs to have bent first snap-fits 11 at one end (e.g., the top end), and does not need the first snap-fit 11 at the other end (e.g., the bottom end). For the rear cover 5, it only needs to have bent second snap-fits 12 at one end (e.g., the bottom end), and does not need the second snap-fit 12 at the other end (e.g., the top end). As a result, it is possible to significantly reduce the manufacturing difficulty of the mold, simplify the configuration of the mold, and reduce the weak positions of a plastic part during injection molding.

Specifically, as illustrated in FIG. 4, the width of the first snap-fit 11 or the second snap-fit 12 in the first direction is between 10 mm and 20 mm. The distance between adjacent two of the first snap-fits 11 in the first direction is between 40 mm and 60 mm. The distance between adjacent two of the second snap-fits 12 in the first direction is between 40 mm and 60 mm. On a cross-section perpendicular to the first direction, either the first snap-fit 11 or the second snap-fit 12 is engaged with the sealing member 9.

In this embodiment, the width of the first snap-fit 11 or the second snap-fit 12 and the distance between adjacent two of the snap-fits can meet the connection strength when the snap-fits are mated with the sealing member 9, while also considering the feasibility and economy of manufacturing.

In addition, on the cross-section perpendicular to the first direction, the first snap-fit 11 and the second snap-fit 12 may be arranged in a staggered manner, that is, on the same cross-section, it is not necessary for both the first snap-fit 11 and the second snap-fit 12 to be engaged with the sealing member 9.

In an embodiment, at least part of the exterior trim panel 1 covers the periphery of the rear cover 5, and an accommodating space for installing a wire harness is formed between a portion of the first inner surface 111 of the exterior trim panel 1 which extends to the periphery of the rear cover 5 and the second outer surface 52 of the rear cover 5.

In this embodiment, the upper end of the exterior trim panel 1 covers the upper part of the rear cover 5 and used to form the first snap-fit 11 that engages with the first snapping groove 91 of the sealing member 9. The accommodating space for installing the wire harness 7 is formed between the first inner surface 111 of the exterior trim panel 1 and the second outer surface 52 of the rear cover 5. The wire harness 7 may be fixed on the second outer surface 52 of the rear cover 5. Specifically, as described above, the wire harness 7 may be fixed to the sidewall of the second outer surface 52 of the rear cover 5 by means of adhesion using the double-sided tape 6.

In an embodiment, the weatherstrip assembly 100 may include a sealing member 9 connected to the weatherstrip body and extending longitudinally along the first direction. A reinforcement 10 is disposed inside the sealing member 9, and a second opening 132 penetrating through the reinforcement 10 is disposed on a side of the sealing member 9 which is assembled with the weatherstrip body.

As described above, the reinforcement 10 is disposed inside the sealing member 9 to support and shape the sealing member 9.

The light-emitting module 4 in the embodiments of the present disclosure specifically is a structure integrating an IC chip and an LED. During use, the amount of generated heat increases compared with the traditional strip-shaped light-emitting element.

The second opening 132 can be provided on the side of the sealing member 9 close to the rear cover 5, so that it can be used for water drainage and heat dissipation. Specifically, in the above embodiments where the first opening 131 is provided, the second opening 132 may be the same opening as the first opening 131, that is, it is unnecessary to additionally provide the second opening 132. In the embodiment without the first opening 131, the second opening 132 may be provided, through which the accumulated water in the cavity between the weatherstrip body and the sealing member 9 can be drained out. In addition, for the weatherstrip assembly 100 provided with the light-emitting module 4, the light-emitting module 4 generates a certain amount of heat during use. If the heat accumulates in a closed cavity and cannot be quickly dissipated to the outside, it directly affects the service life of the light-emitting module 4. Utilizing this second opening 132 can dissipate heat from the cavity between the weatherstrip body and the sealing member 9 to the outside.

There may be a plurality of the second openings 132, which are arranged at intervals along the first direction. Since the second opening 132 has the function of draining the accumulated water, to drain as much water as possible from the cavity between the weatherstrip body and the sealing member 9, the position of the second opening 132 may be set as low as possible. Of course, the positions of the second openings 132 may also be arranged in a staggered manner in the height direction.

Embodiments of the present disclosure further provides a vehicle, which mainly includes the aforementioned weatherstrip assembly 100.

The vehicle with the weatherstrip assembly 100 can achieve the technical effects realized by the embodiments of the weatherstrip assembly 100. For details, please refer to the detailed descriptions of the above embodiments, which will not be repeated here.

Those described above are just illustrative specific embodiments of the present disclosure and are not intended to limit the scope of the present disclosure. Any equivalent change or modification made by those skilled in the art without departing from the concept and the principles of the present disclosure should fall within the protection scope of the present disclosure.

## Claims

1. A weatherstrip assembly for being installed between a vehicle window glass and a door panel sheet metal, wherein the weatherstrip assembly comprises a weatherstrip body and a sealing member;
the sealing element extends longitudinally along a first direction, and has an inner surface facing the door panel sheet metal and an outer surface facing away from the door panel sheet metal, wherein the outer surface is provided with a positioning portion; and
the weatherstrip body as a whole extends longitudinally along the first direction, and is provided with a connecting mechanism, wherein the connecting mechanism is connected to the positioning portion, and arranged in segments along the first direction.

2. The weatherstrip assembly according to claim 1, wherein the connecting mechanism comprises a connecting member disposed on an outer surface of the weatherstrip body, the positioning portion comprises a first opening mated with the connecting member, and the connecting member is connectable to the first opening.

3. The weatherstrip assembly according to claim 2, wherein the connecting member is integrally injection-molded with the weatherstrip body, and the connecting mechanism comprises a plurality of the connecting members which are arranged at predetermined intervals along the first direction.

4. The weatherstrip assembly according to claim 3, wherein a snapping head is provided at an end of each of the connecting members facing away from the outer surface of the weatherstrip body; and
the connecting member is further provided with a deformation portion, which allows the snapping head to contract radially inward when the snapping head is compressed by an external force, and automatically return to its original shape upon removal of the external force.

5. The weatherstrip assembly according to claim 4, wherein the connecting member further comprises a connecting section disposed between the snapping head and the weatherstrip body, an outer radial dimension of the snapping head is larger than that of the connecting section, and the deformation portion comprises a slot extending from the snapping head to the connecting section.

6. The weatherstrip assembly according to claim 2, wherein the positioning portion further comprises at least one snapping groove, and the connecting mechanism further comprises a snapping portion disposed on the weatherstrip body and capable of being engaged with the snapping groove.

7. The weatherstrip assembly according to claim 6, wherein the snapping portion comprises first snap-fits, the snapping groove extends continuously along the first direction, and the first snap-fits are disposed intermittently along the first direction.

8. The weatherstrip assembly according to claim 1, wherein the positioning portion comprises a first snapping groove, the connecting mechanism comprises first snapping portions disposed on the weatherstrip body, the first snapping portions are engaged with the first snapping groove, and the first snapping portions are disposed intermittently along the first direction.

9. The weatherstrip assembly according to claim 1, wherein the positioning portion comprises a first snapping groove and a second snapping groove arranged in a staggered manner in a height direction;
the connecting mechanism comprises first snapping portions and second snapping portions disposed on the weatherstrip body and arranged in a staggered manner in the height direction; and
on a cross-section perpendicular to the first direction, either the first snapping portion or the second snapping portion is engaged with the first snapping groove or the second snapping groove.

10. The weatherstrip assembly according to claim 9, wherein the first snapping portions are first snap-fits formed on the weatherstrip body, and the second snapping portions are second snap-fits formed on the weatherstrip body;
the first snap-fits are engaged with the first snapping groove to form a first snapping mechanism, and the second snap-fits are engaged with the second snapping groove to form a second snapping mechanism; and
the first snapping mechanism and the second snapping mechanism are arranged in a staggered manner in the first direction.

11. The weatherstrip assembly according to any one of claims 1 to 10, wherein the weatherstrip body comprises an exterior trim panel and a rear cover connected to each other, and the exterior trim panel has a first inner surface facing the rear cover and a first outer surface opposite to the first inner surface;
the rear cover has a second inner surface facing the exterior trim panel and a second outer surface opposite to the second inner surface; and
at least part of the first inner surface is sealingly fixed to at least part of the second inner surface in a predetermined mode.

12. The weatherstrip assembly according to claim 11, wherein the exterior trim panel and the rear cover are each integrally injection-molded parts.

13. The weatherstrip assembly according to claim 12, wherein the weatherstrip assembly further comprises a light-emitting module, an installation cavity is formed between the first inner surface and the second inner surface, and the light-emitting module is located in the installation cavity.

14. The weatherstrip assembly according to claim 13, wherein the light-emitting module is fixedly installed on the second inner surface of the rear cover, and the exterior trim panel is provided with a light-emitting area aligned with the light-emitting module.

15. The weatherstrip assembly according to claim 14, wherein a stopper of a predetermined height is provided on the first inner surface of the exterior trim panel and located outside a periphery of the light-emitting area; and
the rear cover is a cap-shaped cover with an open end, which is fitted over a periphery of the stopper.

16. The weatherstrip assembly according to claim 15, wherein the rear cover is fixed to the exterior trim panel by means of ultrasonic welding at a position close to the stopper.

17. The weatherstrip assembly according to claim 16, wherein the stopper is a closed annular structure extending continuously in a circumferential direction.

18. The weatherstrip assembly according to claim 11, wherein at least part of the exterior trim panel covers the periphery of the rear cover; and
an accommodating space for installing a wire harness is formed between a portion of the first inner surface of the exterior trim panel which extends to the periphery of the rear cover and the second outer surface of the rear cover.

19. The weatherstrip assembly according to claim 13, wherein the light-emitting module comprises a plurality of light-emitting elements arranged at intervals along the first direction.

20. The weatherstrip assembly according to claim 1, wherein a reinforcement is disposed inside the sealing member, and a second opening penetrating through the reinforcement is disposed on a side of the sealing member which is assembled with the weatherstrip body.

21. A vehicle, comprising the weatherstrip assembly according to any one of claims 1 to 20.
